# FASCICULE DE BREVET EUROPEEN

(11) **EP 4 544 617 B1**
(45) Date de publication et mention de la délivrance du brevet: **17.06.2026**
(21) Numéro de dépôt: 23733967.6
(22) Date de dépôt: 20.06.2023
(51) Int. Cl.: H01M 8/2475, H01M 8/248

(54) **PILE À COMBUSTIBLE**
FUEL CELL
BRENNSTOFFZELLE

(30) Priorité: 21.06.2022 FR 2206092
(43) Date de publication de la demande: 30.04.2025
(73) Titulaire: SYMBIO FRANCE, 69100 Saint-Fons (FR)
(72) Inventeur: PASSOT, Sylvain, 38210 Tullins (FR); DUCHAMP, Florian, 69800 SAINT PRIEST (FR)
(74) Mandataire: Lavoix
(86) Numéro de dépôt international: PCT/EP2023/066669
(87) Numéro de publication internationale: WO 2023/247556

(56) Documents cités:
- EP-A1- 3 018 748
- DE-A1- 102019 213 723
- US-A1- 2009 280 388
- US-A1- 2018 241 050
- US-A1- 2020 185 750

## Description

La présente invention concerne une pile à combustible.

Dans le domaine des piles à combustible, il est connu d'enserrer un empilement de cellules électrochimiques entre deux plaques terminales, situées de part et d'autre de l'empilement dans une direction d'empilement, et de protéger cet assemblage dans un carter. Les plaques terminales permettent à la fois le maintenir l'empilement compressé, et d'accueillir les connecteurs nécessaires au fonctionnement de la pile à combustible, tels que les arrivées de gaz.

Pendant son fonctionnement, l'empilement de cellules électrochimiques tend à se dilater dans la direction d'empilement, à cause de son vieillissement et d'effets thermiques. Pour que cette dilatation puisse s'effectuer sans dégradation des cellules électrochimiques, il est connu de fixer une première plaque terminale par rapport au carter et de rendre mobile une deuxième plaque terminale par rapport au carter, parallèlement à la direction d'empilement. Ainsi, la deuxième plaque terminale est mobile en fonction de la dilatation de l'empilement et la compression de l'empilement n'est pas augmentée au-delà d'un seuil de tolérance par la dilatation de l'empilement.

Il est connu d'utiliser un système de guidage pour permettre le déplacement de la plaque terminale mobile parallèlement à la direction d'empilement et pour empêcher son déplacement perpendiculairement à la direction d'empilement. Cependant, les systèmes de guidage connus ne donnent globalement pas satisfaction.

Par exemple, US-A-2009/0004533 décrit une pile à combustible dans laquelle la plaque terminale mobile est guidée dans son mouvement parallèlement à la direction d'empilement par des arbres de guidage s'étendant au travers d'ouvertures du carter, et dans laquelle le déplacement de la plaque terminal mobile perpendiculairement à la direction d'empilement est empêché par un contact direct de la plaque terminale contre les parois du carter. Le guidage par les arbres de guidage est hyperstatique, ce qui conduit à un risque de blocage de la plaque terminale mobile et complexifie d'assemblage de la pile à combustible. De plus, dans une telle pile à combustible, il est nécessaire de prévoir un jeu de fonctionnement, c'est-à-dire un espace vide, entre la plaque terminale mobile et les parois du carter, pour permettre à la plaque terminale mobile de se déplacer parallèlement à la direction d'empilement sans risque de coincement ou d'arc-boutement contre les parois du carter. Or, la présence d'un tel jeu de fonctionnement laisse à la plaque terminale mobile et aux cellules électrochimiques la possibilité de vibrer perpendiculairement à la direction d'empilement. De telles vibrations sont néfastes pour la durée de vie des cellules électrochimiques.

Un autre exemple de guidage de la plaque terminale mobile est donné par CN-A-112 993 368. Dans une première direction perpendiculaire à la direction d'empilement, la plaque terminale mobile est guidée par des patins, disposés de part et d'autre de la plaque terminale mobile et en appui contre les parois du carter. Des rails sont en outre disposés sur quatre côtés de la plaque terminale et coopèrent avec des cavaliers montés sur ressorts, reliés aux parois du carter, afin de limiter le déplacement de la plaque terminale mobile dans la première direction ainsi que dans une deuxième direction perpendiculaire à la direction d'empilement et à la première direction. Cette approche, en plus d'être complexe à mettre en oeuvre et de présenter un encombrement important, autorise un déplacement latéral de la plaque terminale mobile parallèlement à la deuxième direction, puisque les cavaliers sont montés sur ressorts. Ainsi, une telle pile à combustible n'empêche pas les vibrations de la plaque terminale mobile, et donc des cellules électrochimiques, dans la deuxième direction, ce qui est néfaste pour la durée de vie des cellules électrochimiques.

US-A-2018/0241050, EP-A-3 018 748 et US-A-2009/280388 décrivent d'autres exemples de système de guidage de la plaque terminale mobile d'une pile à combustible.

C'est à ces inconvénients qu'entend plus particulièrement remédier l'invention, en proposant une pile à combustible permettant le déplacement de la plaque terminale mobile parallèlement à la direction d'empilement, tout en maîtrisant la position de la plaque terminale perpendiculairement à la direction d'empilement.

À cet effet, l'invention concerne une pile à combustible comprenant :
- un carter,
- un empilement de cellules électrochimiques s'étendant selon une direction d'empilement,
- une plaque terminale fixe, disposée à une première extrémité de l'empilement et fixe par rapport au carter,
- une plaque terminale mobile, disposée à une deuxième extrémité de l'empilement et mobile par rapport au carter parallèlement à la direction d'empilement, les plaques terminales fixe et mobile enserrant l'empilement entre elles, et
- un système de guidage de la plaque terminale mobile, configuré pour autoriser le déplacement de la plaque terminale mobile parallèlement à la direction d'empilement et pour limiter le déplacement de la plaque terminale mobile perpendiculairement à la direction d'empilement.

Selon l'invention, le système de guidage de la plaque terminale mobile comprend :
- au moins un organe de compression exerçant un effort de compression sur la plaque terminale mobile, par rapport au carter, selon une direction de compression perpendiculaire à la direction d'empilement,
- deux organes de guidage, fixes par rapport à un premier élément parmi le carter et la plaque terminale mobile, et
- deux appuis obliques, fixes par rapport à un deuxième élément parmi le carter et la plaque terminale mobile différent du premier élément, s'étendant parallèlement à la direction d'empilement, chaque appui oblique étant oblique par rapport à la direction de compression et par rapport à une direction de centrage perpendiculaire à la direction d'empilement et à la direction de compression.

En outre, sous l'effet de l'effort de compression exercé par l'organe de compression, chaque organe de guidage est en appui contre l'un des deux appuis obliques et les deux organes de guidage centrent la plaque terminale mobile, parallèlement à la direction de centrage, par rapport au carter.

Grâce à l'invention, la position de la plaque terminale mobile perpendiculairement à la direction d'empilement est contrainte par les organes de guidage mis en appui contre les appuis obliques par l'organe de compression. Les appuis obliques, en étant obliques par rapport à la direction selon laquelle s'exercent les efforts de compression, permettent à la fois d'empêcher le déplacement de la plaque terminale mobile selon la direction de compression et de centrer la plaque terminale mobile selon la direction de centrage.

Selon des aspects avantageux, mais non obligatoires de l'invention, la pile à combustible incorpore une ou plusieurs des caractéristiques suivantes, prises isolément ou selon toutes combinaisons techniquement admissibles :
- Sous l'effet de l'effort de compression exercé par l'organe de compression, un premier organe de guidage tend à entraîner un déplacement de la plaque terminale mobile selon la direction de centrage, et le deuxième organe de guidage tend à entraîner un déplacement de la plaque terminale opposé à la direction de centrage.
- Chaque appui oblique est formé par une face d'un rail s'étendant parallèlement à la direction d'empilement.
- Chaque appui oblique est incliné par rapport à la direction de compression d'un angle compris entre 30° et 60°, de préférence égal à 45°.
- Les organes de guidage sont des patins présentant des profils complémentaires aux profils des appuis obliques.
- L'organe de compression est une lame élastiquement déformable.
- La lame élastiquement déformable présente deux extrémités et une partie centrale, les deux extrémités de la lame élastiquement déformable sont reliées au premier élément, et la partie centrale de la lame élastiquement déformable est en appui contre le deuxième élément.
- La lame élastiquement déformable s'étend selon une direction parallèle à la direction d'empilement, le système de guidage comprend deux organes de fixation, et chaque organe de fixation relie une extrémité de la lame élastiquement déformable au premier élément en permettant un déplacement de cette extrémité parallèlement à la direction d'empilement et en empêchant un déplacement de cette extrémité perpendiculairement à la direction d'empilement.
- L'appui d'un premier organe de guidage sur un premier appui oblique génère un premier effort de réaction, l'appui du deuxième organe de guidage sur le deuxième appui oblique génère un deuxième effort de réaction, chacun des premier et deuxième efforts de réaction a une première composante dirigée parallèlement à la direction de compression et une deuxième composante dirigée parallèlement à la direction de centrage, les premières composantes des premier et deuxième efforts de réaction sont d'intensité et d'orientation égales et d'orientation opposée à l'orientation de l'effort de compression, et les deuxièmes composantes des premier et deuxième efforts de réaction sont d'intensité égales et d'orientation opposées.
- Le système de guidage comprend, en outre, deux organes de compression latéraux, un premier organe de compression latéral exerçant un effort de compression sur la plaque terminale mobile, par rapport au carter, selon la direction de centrage, et le deuxième organe de compression latéral exerçant un effort de compression sur la plaque terminale mobile, par rapport au carter, opposé à la direction de centrage.
- La pile à combustible comprend en outre un système de serrage exerçant un effort de serrage sur la plaque terminale mobile, par rapport au carter, parallèlement à la direction d'empilement, tendant à comprimer l'empilement de cellules électrochimiques.

L'invention sera mieux comprise et d'autres avantages de celle-ci apparaitront plus clairement à la lumière de la description qui va suivre d'un mode de réalisation d'une pile à combustible, conforme à son principe, donnée uniquement à titre d'exemple et faite en référence aux dessins annexés dans lesquels :
[Fig. 1] La figure 1 est une vue en perspective d'une pile à combustible conforme à l'invention :
[Fig. 2] La figure 2 est une vue analogue à la figure 1, sur laquelle un carter de la pile à combustible n'est pas représenté ;
[Fig. 3] La figure 3 est une vue de face de la pile à combustible de la figure 1 ; et
[Fig. 4] La figure 4 est une coupe selon le plan IV de la pile à combustible de la figure 3.

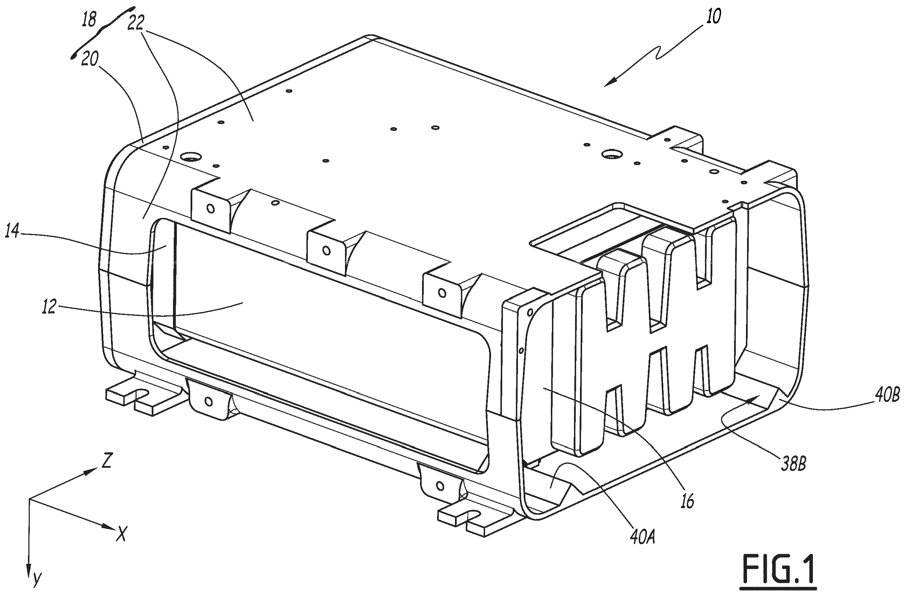

Une pile à combustible 10 est visible sur les figures 1 à 4. La pile à combustible 10 est, par exemple, destinée à être intégrée à un véhicule à moteur électrique afin de produire de l'énergie électrique permettant le fonctionnement du moteur, éventuellement en tout ou partie par l'intermédiaire d'une batterie d'accumulateurs électriques.

La pile à combustible 10 comprend un empilement 12 de cellules électrochimiques, qui ne sont pas individuellement représentées par soucis de simplification. Chaque cellule électrochimique est généralement constituée d'une anode et d'une cathode séparées par une membrane polymère permettant le passage de protons de l'anode à la cathode. L'anode est alimentée en combustible, par exemple du dihydrogène, et la cathode est alimentée en comburant, par exemple de l'oxygène ou de l'air.

Les cellules électrochimiques sont empilées selon une direction d'empilement X pour former l'empilement 12. La direction d'empilement X est celle de la longueur de l'empilement 12, autrement dit la direction longitudinale de cet empilement. De préférence, lorsque la pile à combustible 10 est en fonctionnement, par exemple dans un véhicule, la direction d'empilement X est horizontale.

Dans la présente description, le terme de direction est employé comme étant le sens d'orientation d'une droite dans un plan. En d'autres termes, une direction correspond à une droite orientée, donc à un sens de parcours le long de cette droite.

La pile à combustible 10 comprend une plaque terminale fixe 14 et une plaque terminale mobile 16, qui sont disposées de part et d'autre de l'empilement 12, selon la direction d'empilement X. Dans l'exemple, la direction d'empilement X est orientée de sorte à s'étendre depuis la plaque terminale fixe 14 vers la plaque terminale mobile 16. En pratique, les plaques terminales fixe 14 et mobile 16 s'étendent perpendiculairement à la direction d'empilement X.

En pratique, la plaque terminale fixe 14 est disposée à une première extrémité 12A de l'empilement 12 et la plaque terminale mobile 16 est disposée à une deuxième extrémité 12B de l'empilement, qui correspond à une extrémité libre de l'empilement. En d'autres termes, la plaque terminale mobile 16 forme une extrémité libre de l'assemblage formé par les plaques terminales fixe et mobile et l'empilement 12.

De préférence, la plaque terminale fixe 14 comporte des connecteurs, non-représentés, prévus pour être raccordés à des conduits de circulation de fluides, permettant ainsi d'alimenter l'empilement 12 en gaz combustible et comburant et éventuellement en fluide de refroidissement. De manière connue en soi, d'autres éléments peuvent être interposés entre chacune des plaques terminales 14, 16 et l'empilement. De manière non-limitative, ces éléments sont par exemple une plaque collectrice de courant et/ou une plaque d'isolation.

La pile à combustible 10 comprend un carter 18, qui entoure et protège l'empilement 12 de cellules électrochimiques. En pratique, le carter 18 comprend un fond 20 et des parois latérales 22. Ici, le fond 20 est perpendiculaire à la direction d'empilement X et les parois latérales 22 s'étendent parallèlement à la direction d'empilement X.

La plaque terminale fixe 14 est, en pratique, fixée au carter 18, plus précisément au fond 20 du carter, et la plaque terminale mobile 16 est mobile dans le carter parallèlement à la direction d'empilement X, entre les parois latérales 22, comme détaillé ci-après. Le fond 20 du carter et la plaque terminale fixe 14 forment ainsi un ensemble rigide. Dans l'exemple, le fond du carter et la plaque terminale fixe sont deux pièces distinctes rigidement liées l'une à l'autre. En variante non-représentée de l'invention, le fond du carter et la plaque terminale fixe sont formés en une seule pièce, les deux étant alors confondus.

La pile à combustible 10 comprend un système de serrage 24 exerçant un effort de serrage E24 sur la plaque terminale mobile 16, par rapport au carter 18. Cet effort de serrage E24 est parallèle à et orienté en sens opposé à la direction d'empilement X, qui est une direction longitudinale de l'empilement. L'effort de serrage E24 est donc un effort de compression longitudinal exercé sur la plaque terminale mobile 16. La direction longitudinale X est donc une direction de serrage de l'empilement 12. Le système de serrage 24 tend à rapprocher la plaque terminale mobile 16 de la plaque terminale fixe 14, compressant ainsi l'empilement 12 entre les plaques terminales fixe et mobile. En d'autres termes, les plaques terminales fixe et mobile enserrent entre elles l'empilement 12 sous l'effet de l'effort de serrage E24. La compression de l'empilement 12 entre les plaques terminales fixe 14 et mobile 16 assure un fonctionnement optimum des cellules électrochimiques, et donc de la pile à combustible 10.

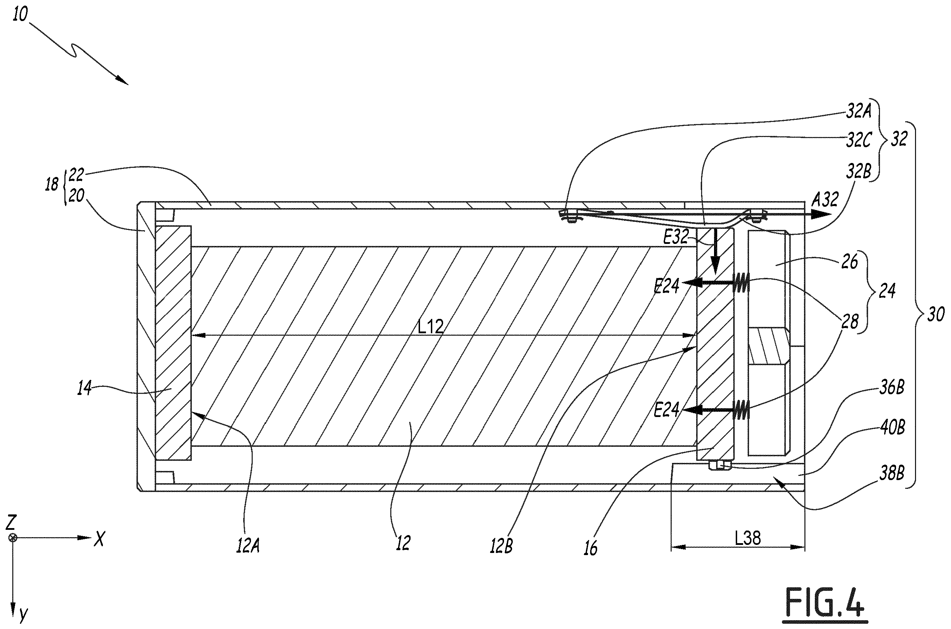

Dans l'exemple, le système de serrage 24 comprend une bride de serrage 26 et des ressorts de compression 28 disposés entre la bride de serrage 26 et la plaque terminale mobile 16, par exemple quatre ou neuf ressorts de compression. Les ressorts de compression 28 sont comprimés de sorte à exercer l'effort de serrage E24 sur la plaque terminale mobile 16, par rapport à la bride de serrage 26, comprimant ainsi l'empilement 12. Ici, la bride de serrage 26 est fixe par rapport au carter 18, par exemple en étant fixée aux parois latérales 22 à l'aide de moyens de fixation non-représentés. Par soucis de simplification, les ressorts de compression 28 ne sont représentés qu'à la figure 4. L'effort de serrage E24 est réparti en plusieurs efforts élémentaires qui s'exercent chacun au niveau d'un ressort de compression et dont deux sont représentés sur la figure 4.

D'autres conceptions sont envisageables pour le système de serrage 24. Selon une première variante non représentée, la bride de serrage 26 peut ne pas être fixée aux parois latérales 22 du carter 18, mais reliée au fond 20 du carter à l'aide de tirants, permettant un déplacement de la bride de serrage perpendiculairement à la direction d'empilement X tout en empêchant un déplacement de la bride de serrage parallèlement à la direction d'empilement X. En outre, en cas de contraintes thermiques importantes s'appliquant à la pile à combustible 10, les tirants peuvent eux aussi tendre à se dilater selon la direction d'empilement X, entraînant un déplacement de la bride de serrage 26 selon la direction d'empilement X.

Selon une autre variante non représentée, le système de serrage 24 comprend, à la place de la bride de serrage et des ressorts de compression, des ressorts de traction qui sont fixés d'une part au fond 20 du carter 18 et d'autre part à la plaque terminale mobile 16.

Au cours de la vie de la pile à combustible 10, l'empilement 12 de cellules électrochimiques tend à se dilater et/ou à se contracter, parallèlement à la direction d'empilement X. Cette variation de longueur de l'empilement 12 est par exemple causée par le vieillissement des cellules électrochimiques, par la montée en pression des fluides dans les canaux des cellules électrochimiques de l'empilement 12, ou par des effets thermiques. En pratique, la variation de dimension de l'empilement 12 est de faible amplitude par rapport à la longueur de l'empilement, notée L12. La variation maximum de dimension de l'empilement 12 est ainsi par exemple égale à un pourcentage compris dans la gamme allant de 0,5 % à 2% de la longueur de l'empilement L12. Par exemple, pour une longueur L12 de l'empilement 12 de l'ordre de 400 mm, mesurée selon la direction d'empilement X, la variation maximale de dimension de l'empilement au cours de sa vie est de l'ordre de quelques millimètres, par exemple 4 mm.

La plaque terminale 14 étant fixe par rapport au carter 18, la variation de longueur de l'empilement 12 entraîne un déplacement de la plaque terminale mobile 16, parallèlement à la direction d'empilement X.

En pratique, les ressorts de compression 28 sont par exemple dimensionnés de manière à absorber la variation maximale de dimension de l'empilement 12 en conservant un effort de serrage dont la variation est suffisamment faible pour rester dans une plage de tolérance d'effort de serrage de l'empilement, quelle que soit la dilatation ou la contraction de l'empilement.

Pour permettre le déplacement de la plaque terminale mobile 16 parallèlement à la direction d'empilement X tout en limitant un déplacement de la plaque terminale mobile perpendiculairement à la direction d'empilement, la pile à combustible 10 comprend un système de guidage 30.

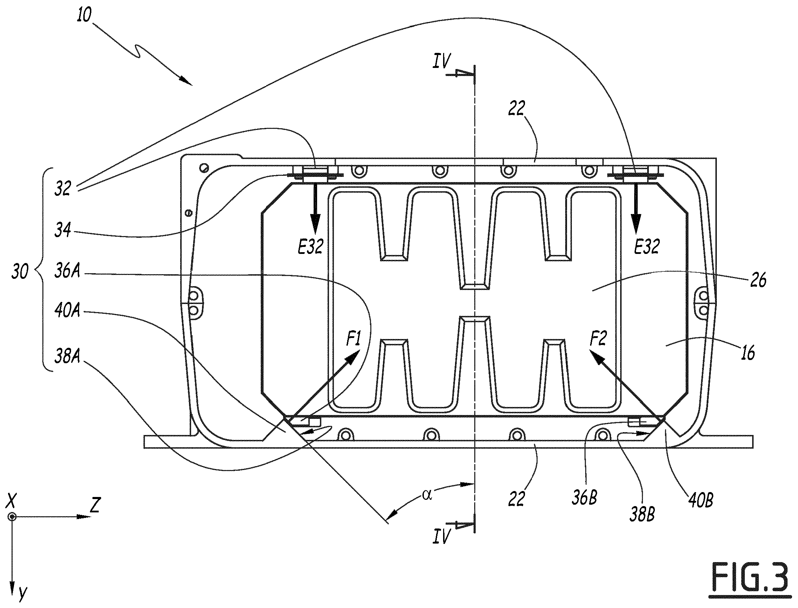

On définit une direction transversale Y de la pile à combustible 10 comme une direction perpendiculaire à la direction d'empilement X et une direction de centrage Z de la pile à combustible comme une direction perpendiculaire à la direction d'empilement X et à la direction transversale Y. De préférence, lorsque la pile à combustible 10 est en fonctionnement, par exemple dans un véhicule, avec la direction d'empilement X horizontale, la direction transversale Y est verticale, et avantageusement orientée vers le bas, et la direction de centrage Z est horizontale. Ici, la direction de centrage Z est arbitrairement définie comme orientée, du point de vue de la figure 3, de la gauche vers la droite et les direction X, Y et Z sont celles des axes d'un repère orthogonal.

Le système de guidage 30 comprend au moins un organe de compression 32, qui exerce un effort de compression E32 sur la plaque terminale mobile 16, par rapport au carter 18, dans la direction transversale Y. La direction transversale est donc une direction de compression de la plaque terminale mobile 16, perpendiculaire à la direction X de compression de l'empilement 12. En d'autres termes, l'effort de compression E32 est transversal par rapport à l'empilement 12.

Dans l'exemple, le système de guidage 30 comprend deux organes de compression 32 exerçant chacun un effort de compression E32 sur la plaque terminale mobile 16. En variante, le système de guidage 30 comprend un nombre différent d'organes de compression 32, par exemple un unique organe de compression ou trois organes de compression.

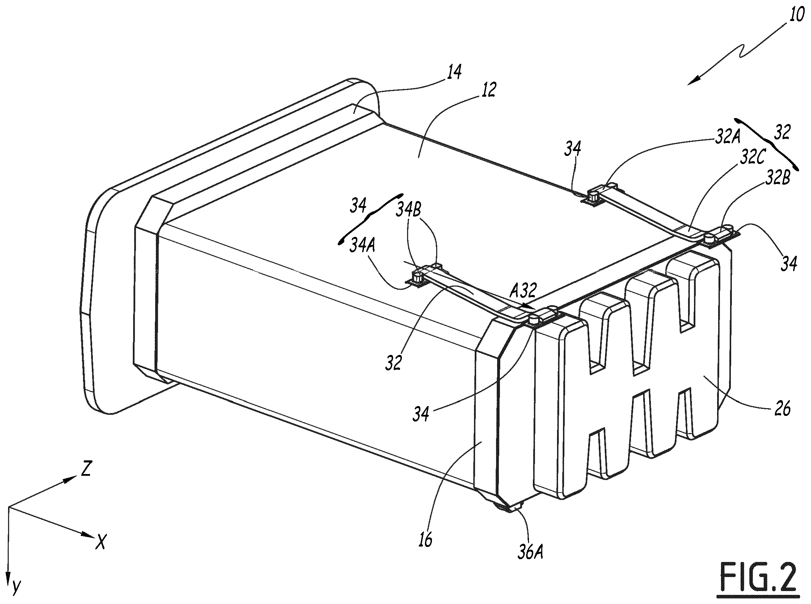

Un organe de compression 32 est par exemple réalisé sous la forme d'une lame élastiquement déformable dont une portion, par exemple une extrémité, est fixée à l'un parmi le carter 18 et la plaque terminale mobile 16, et dont une portion est en appui sur l'autre parmi le carter et la plaque terminale mobile. Ici, les organes de compression 32 sont des lames élastiquement déformables. Dans l'exemple, chaque lame élastiquement déformable 32 présente une première extrémité 32A, une deuxième extrémité 32B et une partie centrale 32C. Chaque lame élastiquement déformable 32 s'étend selon une direction A32 globalement parallèle à la direction d'empilement X et présente un profil bombé selon la direction de compression Y, c'est-à-dire que, selon la direction de compression Y de la plaque terminale mobile 16, la première extrémité 32A est alignée avec la deuxième extrémité 32B mais que la partie centrale 32C n'est pas alignée avec les première et deuxième extrémités 32A, 32B. La direction A32 n'est montrée qu'à la figure 2, pour l'une des deux lames élastiquement déformables 32.

Dans l'exemple, les lames élastiquement déformables 32 sont des lames métalliques déformables. En variante, les lames élastiquement déformables sont réalisées dans un autre matériau, par exemple en matériau polymère ou en matériau composite.

Dans l'exemple, les première et deuxième extrémités 32A, 32B sont reliées au carter 18, en pratique à l'une des parois latérales 22 du carter, et la partie centrale 32C est en appui contre la plaque terminale mobile 16.

En pratique, le système de guidage 30 comprend, pour chaque lame métallique 32, deux organes de fixation 34. De préférence, chaque organe de fixation 34 relie l'une des deux extrémités 32A, 32B d'une lame métallique 32 au carter 18, de sorte à permettre un déplacement de cette extrémité parallèlement à la direction d'empilement X tout en empêchant un déplacement de cette extrémité perpendiculairement à la direction d'empilement X.

Ici, chaque organe de fixation 34 comprend une tôle de retenue 34A et deux éléments de retenue 34B. La tôle de retenue 34A s'étend parallèlement à la paroi latérale 22 du carter 18 à laquelle les extrémités des lames métalliques sont reliées, c'est-à-dire qu'elle s'étend parallèlement à la direction de centrage Z et à la direction d'empilement X, et est fixée à la paroi latérale du carter par les deux éléments de retenue 34B, qui sont dans l'exemple des vis. Les deux vis 34B sont alignées selon la direction d'empilement X et décalées l'une de l'autre parallèlement à la direction de centrage Z. Lorsque la pile à combustible 10 est assemblée, chaque extrémité 32A, 32B de chaque lame métallique 32 est disposée, parallèlement à la direction de compression Y, entre une paroi latérale 22 du carter 18 et la tôle de retenue 34A d'un organe de fixation 34, et, parallèlement à la direction de centrage Z, entre les deux vis 34B de cet organe de fixation 34. Ainsi, le déplacement de chaque extrémité de chaque lame métallique parallèlement aux directions de compression Y et de centrage Z est empêché.

En outre, les organes de fixation 34 permettent un déplacement des lames métalliques 32 parallèlement à la direction d'empilement X. En pratique le déplacement permis d'une lame métallique 32 parallèlement à la direction d'empilement X est de faible amplitude, du fait de la forme bombée des lames métalliques car, en cas de déplacement trop important, la lame métallique entre en contact avec la tôle de retenue 34A de l'un des organes de fixation 34, ce qui empêche un déplacement supplémentaire de la lame métallique.

En variante, chaque organe de fixation 34 fixe l'une des deux extrémités 32A, 32B d'une lame métallique 32 au carter 18 en empêchant tout déplacement de cette extrémité selon les trois directions X, Y et Z.

Lorsque la pile à combustible 10 est assemblée, chaque lame métallique 32 est contrainte entre le carter 18 et la plaque terminale mobile 16, c'est-à-dire que chaque lame métallique est déformée élastiquement pour être mise en place entre le carter et la plaque terminale. Cette mise sous contrainte des lames métalliques 32 est facilitée par la possibilité, pour les extrémités 32A, 32B des lames métalliques, de se déplacer parallèlement à la direction d'empilementX. En pratique, la mise sous contrainte d'une lame métallique 32 génère une force de réaction sur le carter 18 et sur la plaque terminale mobile 16, et génère ainsi un effort de compression E32. Les lames métalliques 32 constituent donc des ressorts de compression.

De préférence, tous les efforts de compression E32 exercés par les lames métalliques 32 sont identiques, aux tolérances de fabrication et d'assemblage près.

L'utilisation de lames métalliques 32 pour exercer l'effort de compression E32 sur la plaque terminale mobile 16 est avantageux, car les lames métalliques sont allongées dans la direction de déplacement de la plaque terminale mobile, c'est-à-dire parallèlement à la direction d'empilement X. Ainsi, les lames métalliques 32, et plus particulièrement leur partie centrale 32C, maintiennent un contact avec la plaque terminale mobile 16 indépendamment de la position de la plaque terminale mobile selon la direction d'empilement X, dans la limite de l'amplitude de dilatation de l'empilement 12. L'effort de compression E32 est donc maintenu sur la plaque terminale mobile 16 tout au long de la vie de la pile à combustible 10.

En variante non-représentée de l'invention, les lames métalliques 32 sont inversées, c'est-à-dire que leurs extrémités 32A, 32B sont fixées à la plaque terminale mobile 16 et que leur partie centrale 32C est en appui contre le carter 18. De préférence, dans une telle variante, la plaque terminale mobile 16 comprend une jupe s'étendant parallèlement à la direction d'empilement X, permettant d'y relier les deux extrémités des lames métalliques.

En variante non-représentée de l'invention, d'autres organes de compression sont utilisés à la place des lames métalliques, comme par exemple des ressorts hélicoïdaux ou des rondelles ressort, dites « rondelles Belleville ». Les organes de compression peuvent également être formés chacun par un organe de compression comprenant un ou plusieurs ressorts hélicoïdaux et/ou une ou plusieurs rondelles ressort en association avec une lame déformable, en particulier avec une lame déformable telle que décrite ci-dessus, ou avec une lame articulée dont une extrémité est fixée à l'un parmi le carter 18 et la plaque terminale mobile 16, dont une portion est en appui sur l'autre parmi le carter et la plaque terminale mobile, et dont une autre portion sert d'appui à l'un ou plusieurs ressorts hélicoïdaux et/ou à l'une ou plusieurs rondelles ressort.

Le système de guidage 30 comprend en outre deux organes de guidage 36A, 36B et deux appuis obliques 38A, 38B s'étendant parallèlement à la direction d'empilement X.

Les organes de guidage 36A, 36B sont, dans l'exemple, fixés sur la plaque terminale mobile 16, à l'opposé des lames métalliques 32, selon la direction de compression Y. En d'autres termes, les lames métalliques 32 et les organes de guidage 36A, 36B sont situés au niveau de deux bords opposés de la plaque terminale 16. En outre, les organes de guidage 36A et 36B sont de préférence disposés symétriquement l'un par rapport à l'autre, par rapport au plan de coupe IV, qui est un plan médian de la pile à combustible parallèle aux directions X et Y.

Les appuis obliques 38A et 38B sont, dans l'exemple, fixés sur le carter 18, et plus précisément sur la paroi latérale 22 du carter opposée à la paroi latérale à laquelle les lames métalliques 32 sont reliées. Ainsi, dans l'exemple où la direction d'empilement est horizontale et la direction de compression est verticale et dirigée vers le bas, les appuis obliques 38A et 38B sont situés sous la plaque terminale mobile 16. En pratique, les appuis obliques 38A et 38B sont obliques par rapport à la direction de compression Y et par rapport à la direction de centrage Z. En d'autres termes, une droite normale aux appuis obliques 38A et 38B est sécante avec les directions de compression Y et de centrage Z. En outre, l'appui oblique 38A est symétrique à l'appui oblique 38B, par rapport à la direction de compression Y, de sorte qu'une droite normale à l'appui oblique 38A est perpendiculaire à une droite normale à l'appui oblique 38B.

Lorsque la pile à combustible 10 est assemblée, sous l'effet des efforts de compression E32 générés par les lames métalliques 32, qui entraînent un déplacement de la plaque terminale 16 dans la direction de compression Y, l'organe de guidage 36A est mis en appui contre l'appui oblique 38A et l'organe de guidage 36B est mis en appui contre l'appui oblique 38B. Ainsi, l'appui oblique 38A exerce un effort de réaction F1 sur l'organe de guidage 36A, dirigé perpendiculairement à l'appui oblique 38A, et l'appui oblique 38B exerce un effort de réaction F2 sur l'organe de guidage 36B, dirigé perpendiculairement à l'appui oblique 38A.

Les efforts de réaction F1 et F2 sont orientés perpendiculairement à la direction d'empilement X et de manière oblique aux directions de compression Y et de centrage Z. En outre, l'effort de réaction F1 est symétrique de l'effort de réaction F2, par rapport à la direction de compression Y. En d'autres termes, les efforts de réaction F1 et F2 ont chacun une première composante dirigée parallèlement à la direction de compression Y et une deuxième composante dirigée parallèlement à la direction de centrage Z, les premières composantes des efforts de réaction F1 et F2 sont d'intensité et d'orientation égales et les deuxièmes composantes des efforts de réaction F1 et F2 sont d'intensité égales et d'orientation opposées.

On comprend alors que l'effort de réaction F1 tend à entraîner un déplacement de la plaque terminale mobile 16 selon la direction de centrage Z et que l'effort de réaction F2 tend à entraîner un déplacement de la plaque terminale mobile 16 à l'opposé de la direction de centrage Z. Ces deux efforts contraires entraînent un centrage de la plaque terminale mobile 16 par rapport aux appuis obliques 38A, 38B, parallèlement à la direction de centrage Z. Avantageusement, les appuis obliques 38A et 38B sont eux-mêmes centrés par rapport à la plaque terminale fixe 14. La plaque terminale mobile 16, sous l'effet des efforts de réaction F1 et F2, est centrée par rapport à la plaque terminale fixe 14, parallèlement à la direction de centrage Z.

En outre, de manière particulièrement avantageuse, les appuis obliques 38A et 38B convergent à l'opposé de la paroi 22 du carter 18 à laquelle les lames métalliques 32 sont reliées, c'est-à-dire qu'un vecteur normal à l'appui oblique 38A et qu'un vecteur normal à l'appui oblique 38B convergent l'un vers l'autre. Ainsi, les deuxièmes composantes des efforts de réaction F1 et F2 convergent. Le centrage de la plaque terminale mobile 16 est ainsi amélioré.

En variante non-représentée de l'invention, les appuis obliques 38A et 38B divergent à l'opposé de la paroi 22 du carter 18 à laquelle les lames métalliques 32 sont reliées, c'est-à-dire qu'un vecteur normal à l'appui oblique 38A et qu'un vecteur normal à l'appui oblique 38B divergent l'un de l'autre, et les deuxièmes composantes des efforts de réaction F1 et F2 divergent.

De plus, la somme des efforts de compression E32 et des efforts de réaction F1 et F2 est nulle, de sorte que, une fois que les organes de guidage 36A, 36B sont plaqués sur les deux appuis obliques 38A, 38B par les organes de compression, ces efforts n'entraînent aucun déplacement la plaque terminale mobile 16, par rapport au carter 18, perpendiculairement à la direction d'empilement X. En d'autres termes, les efforts de compression E32 et de réaction F1 et F2 contraignent la position de la plaque terminale mobile 16 par rapport au carter 18, perpendiculairement à la direction d'empilement X.

Ainsi, de manière particulièrement avantageuse, les efforts de compression E32 et de réaction F1, F2 contraignent la position de la plaque terminale mobile 16 parallèlement à la direction de compression Y, de sorte à plaquer les organes de guidage 36A, 36B contre les appuis obliques 38A, 38B, c'est-à-dire en déplaçant au maximum la plaque terminale mobile 16 dans la direction de compression Y. De même, les efforts de compression E32 et de réaction F1, F2 contraignent la position de la plaque terminale mobile 16 parallèlement à la direction de centrage Z, en centrant la plaque terminale mobile par rapport à la plaque terminale fixe 14, c'est-à-dire par rapport au carter 18.

Cette mise en appui de la plaque terminale mobile 16 dans la direction Y et ce centrage de la plaque terminale mobile par rapport au carter 18, et donc par rapport à la plaque terminale fixe 14, parallèlement à la direction de centrage Z, sont particulièrement avantageux pour éviter une déformation de l'empilement 12 et pour éviter des vibrations de l'empilement 12, susceptibles de dégrader les cellules électrochimiques. La durée de vie de la pile à combustible 10 est ainsi augmentée.

En pratique, le système de guidage 30 limite tout déplacement de la plaque terminale mobile 16 dans la direction de compression Y ainsi que parallèlement à la direction de centrage Z, grâce à l'appui des organes de guidage 36A, 36B contre les appuis obliques 38A, 38B. En outre, puisque les efforts de compression E32 et de réaction F1, F2 sont perpendiculaires à la direction d'empilement X, le système de guidage 30 ne s'oppose pas au déplacement de la plaque latérale mobile parallèlement à la direction d'empilement X.

De plus, le système de guidage 30 limite tout déplacement de la plaque terminale mobile 16 à l'opposé des efforts de compression E32, autrement dit à l'opposé de la direction de compression Y, c'est-à-dire vers le haut dans l'exemple de la figure 3, grâce aux efforts de compression E32 générés par les lames métalliques 32. Ainsi, un déplacement de la plaque terminale mobile 16 à l'opposé de la direction de compression Y est en théorie possible, mais un tel déplacement doit être provoqué par un effort sur la plaque terminale mobile dirigé à l'opposé de la direction de compression Y, c'est-à-dire à l'opposé des efforts de compression E32, et d'intensité supérieure aux efforts de compression E32. En pratique, lors d'une utilisation normale de la pile à combustible 10, par exemple dans un véhicule, les efforts subis par la plaque terminale mobile 16 proviennent essentiellement des vibrations du véhicule, et leur intensité est inférieure aux efforts de compression E32. Ainsi, en utilisation normale de la pile à combustible 10, les lames métalliques 32 sont avantageusement dimensionnées pour exercer des efforts de compression E32 sur la plaque terminale mobile 16 suffisants pour empêcher le déplacement de la plaque terminale mobile 16 selon la direction de compression Y. À titre exemple, une somme des efforts de compression E32 environ égale à 1000 N permet d'éviter tout déplacement vertical vers le haut de la plaque terminale mobile 16 en conditions d'utilisation normales de la pile à combustible 10, c'est-à-dire tant que les accélérations subies par la plaque terminale mobile parallèlement à la direction de compression Y sont inférieures à 15g, avec « g » exprimant l'accélération de la pesanteur standard.

En outre, le fait que la direction de compression Y soit préférentiellement orientée verticalement et que les efforts de compression E2 soient dirigés vers le bas selon cette direction verticale induit qu'un déplacement vertical vers le haut de la plaque terminale mobile 16 est également limité par le poids propre de la plaque terminale mobile et de l'empilement 12, qui s'additionne aux efforts de compression E32 pour limiter le déplacement vertical vers le haut de la plaque terminale mobile.

Il est avantageux que les appuis obliques 38A, 38B s'étendent parallèlement à la direction d'empilement X car, ainsi, le contact entre les appuis obliques et les organes de guidage 36A, 36B est maintenu indépendamment de la dilatation de l'empilement 12. En pratique, les appuis obliques 38A et 38B s'étendent sur une longueur L38 au moins égale à l'amplitude maximale de dilatation de l'empilement 12.

En pratique, les appuis obliques 38A et 38B sont inclinés par rapport à la direction de compression Y d'un angle α compris entre 30° et 60°. De préférence, les appuis obliques 38A et 38B sont inclinés de 45° par rapport à la direction de compression Y, et donc également inclinés de 45° par rapport à la direction de centrage Z. Ainsi, pour chacun des efforts de réaction F1 et F2, la première composante est égale, en intensité, à la deuxième composante. Cette configuration est avantageuse pour équilibrer les efforts s'exerçant sur la plaque terminale mobile 16 parallèlement à la direction de compression Y aux efforts s'exerçant sur la plaque terminale mobile 16 parallèlement à la direction de centrage Z.

Grâce au système de guidage 30, la position de la plaque terminale mobile 16 est contrainte de manière rigide parallèlement aux directions de compression Y et de centrage Z. Les mouvements de la plaque terminale mobile selon ces directions sont ainsi en pratique éliminés, lorsque la pile à combustible est en fonctionnement, ce qui diminue les contraintes mécaniques s'exerçant sur les cellules électrochimiques de l'empilement 12 et augmente ainsi leur durée de vie. Avantageusement, en condition d'utilisation normale de la pile à combustible 10, le système de guidage 30 empêche le déplacement de la plaque terminale mobile 16 parallèlement aux directions de compression Y et de centrage Z. En d'autres termes, grâce au system de guidage 30, la plaque terminale mobile 16 est mobile parallèlement à la direction d'empilement X par rapport au carter 18 selon une liaison glissière, dans des conditions d'utilisation normales de la pile à combustible 10.

Un avantage du système de guidage 30 est de permettre, grâce aux appuis obliques 38A, 38B qui sont obliques par rapport aux directions de compression Y et de centrage Z, de contraindre le déplacement de la plaque terminale mobile 16 à la fois parallèlement à la direction de compression Y et parallèlement à la direction de guidage Z, en exerçant des efforts de compression sur la plaque terminale mobile uniquement dans la direction de compression Y, à l'aide des lames métalliques 32. La conception du système de guidage 30 est ainsi particulièrement simple, réduisant le coût de fabrication de la pile à combustible 10.

Un autre avantage du système de guidage 30 est de n'exercer des efforts que sur la plaque terminale mobile 16 et sur le carter 18, et de ne pas exercer d'efforts sur l'empilement 12. L'empilement 12 est ainsi suspendu entre les plaques terminales fixe 14 et mobile 16 et les efforts mécaniques s'exerçant sur les cellules électrochimiques diminués.

De manière avantageuse mais non-obligatoire, la pile à combustible 10 est intégrée à un véhicule en étant reliée à un châssis de ce véhicule par l'intermédiaire d'un dispositif d'amortissement, comme par exemple par l'intermédiaire de ressorts et/ou de plots élastomères, qui sont avantageusement dans ce cas prévus entre le carter 18 et le châssis du véhicule. Un tel dispositif d'amortissement permet notamment de limiter les vibrations subies par la pile à combustible. Il est particulièrement avantageux d'amortir les mouvements relatifs de la pile à combustible par rapport au châssis du véhicule afin de diminuer les contraintes mécaniques s'exerçant sur la pile à combustible 10 de manière générale, et sur les cellules électrochimiques de l'empilement 12 en particulier. Un tel dispositif d'amortissement est en outre particulièrement adapté pour être utilisé avec le système de guidage 30 de l'invention, puisque le dispositif d'amortissement diminue les contraintes mécaniques s'exerçant sur la pile à combustible et que le système de guidage permet que les contraintes mécaniques restantes après amortissement n'entraînent pas de déplacement de la plaque terminale mobile 16, par rapport au carter 18, susceptible de dégrader les cellules électrochimiques de l'empilement 12.

Dans l'exemple, les deux organes de guidage 36A, 36B sont deux patins, qui sont fixés sur la plaque terminale mobile 16, et les deux appuis obliques 38A, 38B sont formés par les faces de deux rails 40A, 40B fixés sur, ou monobloc avec, le carter 18, et plus précisément avec l'une des parois latérales 22 du carter. Les patins 36A, 36B présentent des profils complémentaires aux profils des appuis obliques 38A, 38B afin de permettre un contact optimum entre les patins et les appuis obliques.

De manière avantageuse mais non obligatoire, les patins 36A, 36B peuvent être constitués ou recouverts d'un matériau à propriétés à faible coefficient de frottement, comme par exemple du polytétrafluoroéthylène, également connu sous le nom commercial « Téflon », ou peuvent être constitués de matériaux avec des états de surface assurant un faible coefficient de frottement.

Ici, les deux rails 40A, 40B s'étendent parallèlement l'un à l'autre et parallèlement à la direction d'empilement X et présentent un profil triangulaire. Les appuis obliques 38A, 38B sont donc des surfaces planes. Dans l'exemple, les appuis obliques 38A et 38B sont formés par des faces des rails 40A, 40B dont la normale à la surface est orientée vers le centre de la plaque terminale mobile 16, comme visible à la figure 3.

En variante non-représentée de l'invention, les appuis obliques sont formés par des faces des rails 40A, 40B orientés vers l'extérieur de la plaque terminale mobile. Ainsi, les appuis obliques 38A et 38B divergent à l'opposé de la paroi 22 du carter 18 à laquelle les lames métalliques 32 sont reliées.

En variante non-représentée de l'invention, les deux appuis obliques 38A, 38B sont formés sur deux faces distinctes d'un même rail.

En variante non-représentée de l'invention, les rails 40A, 40B présentent un autre profil qu'un profil triangulaire, comme par exemple un profil trapézoïdal ou en forme de quadrilatère quelconque présentant au moins une face oblique de sorte à former un appui oblique 38A, 38B.

En variante non-représentée de l'invention, les appuis obliques 38A, 38B ne sont pas plats, mais présentent un autre profil, par exemple un profil en arc-de-cercle ou en ellipse, ce profil étant vu perpendiculairement à la direction d'empilement X et s'étendant selon la direction d'empilement. Dans une telle variante, la forme des organes de guidage 36A, 36B est adaptée pour correspondre au profil des appuis obliques 38A, 38B. Par exemple, les organes de guidage sont en forme de boule.

En variante non-représentée de l'invention, les organes de guidage 36A, 36B sont fixés sur le carter 18 et les rails 40A, 40B formant les appuis obliques 38A, 38B sont fixés sur la plaque terminale mobile 16.

En variante non-représentée de l'invention, le positionnement des organes de compression 32, d'une part, et des organes de guidage 36A, 36B et des appuis obliques 38A, 38B, d'autre part sont inversés. Dans une telle variante, la direction de compression Y est verticale et dirigée vers le haut.

En pratique, la pile à combustible 10 peut également être mise en oeuvre avec d'autres orientations pour les directions d'empilement X, de compression Y et de centrage Z. Par exemple, la direction d'empilement peut être verticale, ou alors la direction de centrage Z peut être verticale.

En variante non-représentée de l'invention, le système de guidage 30 comprend également deux organes de compression latéraux, disposés de part et d'autre de la plaque terminale mobile 16, parallèlement à la direction de centrage Z, qui exercent des efforts de compression sur la plaque terminale mobile parallèlement à la direction de centrage. Ainsi, un premier des deux organes de compression latéraux exerce un effort de compression sur la plaque terminale mobile 16, par rapport au carter 18, selon la direction de centrage Z, et un deuxième des deux organes de compression latéraux exerce un effort de compression sur la plaque terminale mobile, par rapport au carter, opposé à la direction de centrage. Dans une telle variante, le centrage de la plaque terminale mobile par rapport à la plaque terminale fixe 14 est renforcé.

Toute caractéristique décrite pour un mode de réalisation ou une variante dans ce qui précède peut être mise en oeuvre pour les autres modes de réalisation et variantes décrits précédemment, pour autant que techniquement faisable.

## Revendications

1. Pile à combustible (10) comprenant :
- un carter (18),
- un empilement (12) de cellules électrochimiques s'étendant selon une direction d'empilement (X),
- une plaque terminale fixe (14), disposée à une première extrémité (12A) de l'empilement et fixe par rapport au carter,
- une plaque terminale mobile (16), disposée à une deuxième extrémité (12B) de l'empilement et mobile par rapport au carter parallèlement à la direction d'empilement, les plaques terminales fixe (14) et mobile (16) enserrant l'empilement (12) entre elles, et
- un système de guidage (30) de la plaque terminale mobile, configuré pour autoriser le déplacement de la plaque terminale mobile parallèlement à la direction d'empilement (X) et pour limiter le déplacement de la plaque terminale mobile perpendiculairement à la direction d'empilement,
**caractérisé en ce que** le système de guidage (30) de la plaque terminale mobile (16) comprend :
- au moins un organe de compression (32) exerçant un effort de compression (E32) sur la plaque terminale mobile (16), par rapport au carter (18), selon une direction de compression (Y) perpendiculaire à la direction d'empilement (X),
- deux organes de guidage (36A, 36B), fixes par rapport à un premier élément (16, 18) parmi le carter et la plaque terminale mobile, et
- deux appuis obliques (38A, 38B), fixes par rapport à un deuxième élément (16, 18) parmi le carter et la plaque terminale mobile différent du premier élément, s'étendant parallèlement à la direction d'empilement (X), chaque appui oblique étant oblique par rapport à la direction de compression (Y) et par rapport à une direction de centrage (Z) perpendiculaire à la direction d'empilement et à la direction de compression,
et **en ce que**, sous l'effet de l'effort de compression (E32) exercé par l'organe de compression (32), chaque organe de guidage (36A, 36B) est en appui contre l'un des deux appuis obliques (38A, 38B) et les deux organes de guidage centrent la plaque terminale mobile (16), parallèlement à la direction de centrage (Z), par rapport au carter (18).

2. Pile à combustible (10) selon la revendication 1, dans laquelle, sous l'effet de l'effort de compression (E32) exercé par l'organe de compression (32), un premier organe de guidage (36A) tend à entraîner un déplacement de la plaque terminale mobile (16) selon la direction de centrage (Z), et le deuxième organe de guidage (36B) tend à entraîner un déplacement de la plaque terminale opposé à la direction de centrage.

3. Pile à combustible (10) selon l'une quelconque des revendications 1 et 2, dans laquelle chaque appui oblique (38A, 38B) est formé par une face d'un rail (40A, 40B) s'étendant parallèlement à la direction d'empilement (X).

4. Pile à combustible (10) selon l'une quelconque des revendications 1 à 3, dans laquelle chaque appui oblique (38A, 38B) est incliné par rapport à la direction de compression (Y) d'un angle (α) compris entre 30° et 60°, de préférence égal à 45°.

5. Pile à combustible (10) selon l'une quelconque des revendications 1 à 4, dans laquelle les organes de guidage (36A, 36B) sont des patins présentant des profils complémentaires aux profils des appuis obliques (38A, 38B).

6. Pile à combustible (10) selon l'une quelconque des revendications 1 à 5, dans laquelle l'organe de compression (32) est une lame élastiquement déformable.

7. Pile à combustible (10) selon la revendication 6, dans laquelle la lame élastiquement déformable (32) présente deux extrémités (32A, 32B) et une partie centrale (32C), dans laquelle les deux extrémités de la lame élastiquement déformable sont reliées au premier élément (16, 18), et dans laquelle la partie centrale de la lame élastiquement déformable est en appui contre le deuxième élément (16, 18).

8. Pile à combustible (10) selon la revendication 7, dans laquelle la lame élastiquement déformable (32) s'étend selon une direction (A32) parallèle à la direction d'empilement (X), dans laquelle le système de guidage (30) comprend deux organes de fixation (34), et dans laquelle chaque organe de fixation relie une extrémité (32A, 32B) de la lame élastiquement déformable au premier élément (16, 18) en permettant un déplacement cette extrémité parallèlement à la direction d'empilement (X) et en empêchant un déplacement de cette extrémité perpendiculairement à la direction d'empilement.

9. Pile à combustible (10) selon l'une quelconque des revendications 1 à 8, dans laquelle l'appui d'un premier organe de guidage (36A) sur un premier appui oblique (38A) génère un premier effort de réaction (F1), dans laquelle l'appui du deuxième organe de guidage (36B) sur le deuxième appui oblique (38B) génère un deuxième effort de réaction (F2), dans laquelle chacun des premier et deuxième efforts de réaction a une première composante dirigée parallèlement à la direction de compression (Y) et une deuxième composante dirigée parallèlement à la direction de centrage (Z), dans laquelle les premières composantes des premier et deuxième efforts de réaction sont d'intensité et d'orientation égales et d'orientation opposée à l'orientation de l'effort de compression (E32), et dans laquelle les deuxièmes composantes des premier et deuxième efforts de réaction sont d'intensité égales et d'orientation opposées.

10. Pile à combustible (10) selon l'une quelconque des revendications 1 à 9, dans laquelle le système de guidage (30) comprend, en outre, deux organes de compression latéraux, un premier organe de compression latéral exerçant un effort de compression sur la plaque terminale mobile (16), par rapport au carter (18), selon la direction de centrage (Z), et le deuxième organe de compression latéral exerçant un effort de compression sur la plaque terminale mobile, par rapport au carter, opposé à la direction de centrage.

11. Pile à combustible (10) selon l'une quelconque des revendications 1 à 9, dans laquelle la pile à combustible (10) comprend en outre un système de serrage (24) exerçant un effort de serrage (E24) sur la plaque terminale mobile (16), par rapport au carter (18), parallèlement à la direction d'empilement (X), tendant à comprimer l'empilement (12) de cellules électrochimiques.

## Patentansprüche

1. Brennstoffzelle (10), umfassend:
- ein Gehäuse (18),
- einen Stapel (12) elektrochemischer Zellen, der sich gemäß einer Stapelrichtung (X) erstreckt,
- eine feste Endplatte (14), die an einem ersten Ende (12A) des Stapels angeordnet und relativ zu dem Gehäuse fest ist,
- eine bewegliche Endplatte (16), die an einem zweiten Ende (12B) des Stapels angeordnet und relativ zu dem Gehäuse parallel zu der Stapelrichtung beweglich ist, wobei die feste (14) und die bewegliche (16) Endplatte den Stapel (12) zwischen sich einklemmen, und
- ein Führungssystem (30) der beweglichen Endplatte, das ausgelegt ist, um die Verschiebung der beweglichen Endplatte parallel zu der Stapelrichtung (X) zu gestatten und um die Bewegung der beweglichen Endplatte senkrecht zu der Stapelrichtung zu begrenzen,
**dadurch gekennzeichnet, dass** das Führungssystem (30) der beweglichen Endplatte (16) umfasst:
- mindestens ein Kompressionselement (32), das eine Kompressionskraft (E32) auf die bewegliche Endplatte (16) relativ zu dem Gehäuse (18) gemäß einer Kompressionsrichtung (Y) ausübt, die senkrecht zu der Stapelrichtung (X) ist,
- zwei Führungselemente (36A,36B), die relativ zu einem ersten Element (16, 18), ausgewählt aus dem Gehäuse und der beweglichen Endplatte, fest sind, und
- zwei schräge Auflagen (38A,38B), die relativ zu einem zweiten Element (16, 18), ausgewählt aus dem Gehäuse und der beweglichen Endplatte, das sich vom ersten Element unterscheidet, fest sind, wobei sie sich parallel zu der Stapelrichtung (X) erstrecken, wobei jede schräge Auflage schräg relativ zu der Kompressionsrichtung (Y) und relativ zu einer Zentrierrichtung (Z) ist, die senkrecht zu der Stapelrichtung und zu der Kompressionsrichtung ist,
und dadurch, dass jedes Führungselement (36A, 36B) unter der Wirkung der von dem Kompressionselement (32) ausgeübten Kompressionskraft (E32) an einer der beiden schrägen Auflagen (38A, 38B) anliegt und die beiden Führungselemente die bewegliche Endplatte (16) parallel zu der Zentrierrichtung (Z) relativ zu dem Gehäuse (18) zentrieren.

2. Brennstoffzelle (10) nach Anspruch 1, wobei unter der Wirkung der von dem Kompressionselement (32) ausgeübten Kompressionskraft (E32) ein erstes Führungselement (36A) dazu neigt, eine Verschiebung der beweglichen Endplatte (16) gemäß der Zentrierrichtung (Z) zu bewirken, und das zweite Führungselement (36B) dazu neigt, eine Verschiebung der beweglichen Endplatte entgegengesetzt zu der Zentrierrichtung zu bewirken.

3. Brennstoffzelle (10) nach einem der Ansprüche 1 und 2, wobei jede schräge Auflage (38A, 38B) von einer Fläche einer Schiene (40A, 40B) gebildet ist, die sich parallel zu der Stapelrichtung (X) erstreckt.

4. Brennstoffzelle (10) nach einem der Ansprüche 1 bis 3, wobei jede schräge Auflage (38A, 38B) relativ zu der Kompressionsrichtung (Y) in einem Winkel (α) zwischen 30° und 60°, vorzugsweise von gleich 45°, geneigt ist.

5. Brennstoffzelle (10) nach einem der Ansprüche 1 bis 4, wobei die Führungselemente (36A, 36B) Gleitstücke sind, die Profile aufweisen, die zu den Profilen der schrägen Auflagen (38A, 38B) komplementär sind.

6. Brennstoffzelle (10) nach einem der Ansprüche 1 bis 5, wobei das Kompressionselement (32) eine elastisch verformbare Federzunge ist.

7. Brennstoffzelle (10) nach Anspruch 6, wobei die elastisch verformbare Federzunge (32) zwei Enden (32A, 32B) und einen mittleren Abschnitt (32C) aufweist, wobei die beiden Enden der elastisch verformbaren Federzunge mit dem ersten Element (16, 18) verbunden sind und wobei der mittlere Abschnitt der elastisch verformbaren Federzunge am zweiten Element (16, 18) anliegt.

8. Brennstoffzelle (10) nach Anspruch 7, wobei sich die elastisch verformbare Federzunge (32) gemäß einer Richtung (A32) parallel zu der Stapelrichtung (X) erstreckt, wobei das Führungssystem (30) zwei Befestigungselemente (34) umfasst und wobei jedes Befestigungselement ein Ende (32A, 32B) der elastisch verformbaren Federzunge mit dem ersten Element (16, 18) verbindet, indem es eine Verschiebung dieses Endes parallel zu der Stapelrichtung (X) erlaubt und eine Verschiebung dieses Endes senkrecht zu der Stapelrichtung verhindert.

9. Brennstoffzelle (10) nach einem der Ansprüche 1 bis 8, wobei das Anliegen eines ersten Führungselements (36A) an einer ersten schrägen Auflage (38A) eine erste Reaktionskraft (F1) erzeugt, wobei das Anliegen des zweiten Führungselements (36B) an der zweiten schrägen Auflage (38B) eine zweite Reaktionskraft (F2) erzeugt, wobei jede Reaktionskraft, die erste und zweite, eine erste Komponente aufweist, die parallel zu der Kompressionsrichtung (Y) gerichtet ist, und eine zweite Komponente, die parallel zu der Zentrierrichtung (Z) gerichtet ist, wobei die ersten Komponenten der ersten und zweiten Reaktionskraft gleicher Stärke und Ausrichtung und Ausrichtung entgegengesetzt zu der Ausrichtung der Kompressionskraft (E32) sind, und wobei die zweiten Komponenten der ersten und zweiten Reaktionskraft gleicher Stärke und entgegengesetzter Ausrichtung sind.

10. Brennstoffzelle (10) nach einem der Ansprüche 1 bis 9, wobei das Führungssystem (30) ferner zwei seitliche Kompressionselemente umfasst, wobei ein erstes seitliches Kompressionselement eine Kompressionskraft auf die bewegliche Endplatte (16) relativ zu dem Gehäuse (18) gemäß der Zentrierrichtung (Z) ausübt und das zweite seitliche Kompressionselement eine Kompressionskraft auf die bewegliche Endplatte relativ zu dem Gehäuse entgegengesetzt zu der Zentrierrichtung ausübt.

11. Brennstoffzelle (10) nach einem der Ansprüche 1 bis 9, wobei die Brennstoffzelle (10) ferner ein Spannsystem (24) umfasst, das eine Spannkraft (E24) auf die bewegliche Endplatte (16) relativ zu dem Gehäuse (18) parallel zu der Stapelrichtung (X) ausübt, die dazu neigt, den Stapel (12) elektrochemischer Zellen zu komprimieren.

## Claims

1. A fuel cell (10) comprising:
- a housing (18),
- a stack (12) of electrochemical cells extending according to a stacking direction (X),
- a fixed end plate (14), arranged at a first end (12A) of the stack and fixed relative to the housing,
- a movable end plate (16), arranged at a second end (12B) of the stack and movable relative to the housing, parallel to the stacking direction, the fixed (14) and movable (16) end plates clamping the stack (12) between them, and
- a guidance system (30) for the movable end plate, configured to allow the displacement of the movable end plate parallel to the stacking direction (X) and to limit the displacement of the movable end plate perpendicular to the stacking direction,
**characterized in that** the guidance system (30) for the movable end plate (16) comprises:
- at least one compression member (32) exerting a compression force (E32) on the movable end plate (16), relative to the housing (18), according to a compression direction (Y) perpendicular to the stacking direction (X),
- two guide members (36A, 36B), fixed relative to a first element (16, 18) from among the housing and the movable end plate, and
- two oblique abutments (38A, 38B), fixed relative to a second element (16, 18) from among the housing and the movable end plate different from the first element, extending parallel to the stacking direction (X), each oblique abutment being oblique relative to the compression direction (Y) and relative to a centering direction (Z) perpendicular to the stacking direction and to the compression direction,
and **in that**, under the effect of the compression force (E32) exerted by the compression member (32), each guide member (36A, 36B) is bearing against one of the two oblique abutments (38A, 38B) and the two guide members center the movable end plate (16), parallel to the centering direction (Z), relative to the housing (18).

2. The fuel cell (10) according to claim 1, wherein, under the effect of the compression force (E32) exerted by the compression member (32), a first guide member (36A) tends to cause a displacement of the movable end plate (16) according to the centering direction (Z), and the second guide member (36B) tends to cause a displacement of the end plate opposite to the centering direction.

3. The fuel cell (10) according to any one of claims 1 and 2, wherein each oblique abutment (38A, 38B) is formed by a face of a rail (40A, 40B) extending parallel to the stacking direction (X).

4. The fuel cell (10) according to any one of claims 1 to 3, wherein each oblique abutment (38A, 38B) is inclined relative to the compression direction (Y) by an angle (α) of between 30° and 60°, preferably equal to 45°.

5. The fuel cell (10) according to any one of claims 1 to 4, wherein the guide members (36A, 36B) are shoes presenting profiles complementary to the profiles of the oblique abutments (38A, 38B).

6. The fuel cell (10) according to any one of claims 1 to 5, wherein the compression member (32) is an elastically deformable blade.

7. The fuel cell (10) according to claim 6, wherein the elastically deformable blade (32) presents two ends (32A, 32B) and a central part (32C), wherein the two ends of the elastically deformable blade are connected to the first element (16, 18), and wherein the central part of the elastically deformable blade is bearing against the second element (16, 18).

8. The fuel cell (10) according to claim 7, wherein the elastically deformable blade (32) extends according to a direction (A32) parallel to the stacking direction (X), wherein the guidance system (30) comprises two fixing members (34), and wherein each fixing member connects one end (32A, 32B) of the elastically deformable blade to the first element (16, 18), allowing a displacement of this end parallel to the stacking direction (X) and preventing a displacement of this end perpendicular to the stacking direction.

9. The fuel cell (10) according to any one of claims 1 to 8, wherein the abutment of a first guide member (36A) on a first oblique abutment (38A) generates a first reaction force (F1), wherein the abutment of the second guide member (36B) on the second oblique abutment (38B) generates a second reaction force (F2), wherein each of the first and second reaction forces has a first component directed parallel to the compression direction (Y) and a second component directed parallel to the centering direction (Z), wherein the first components of the first and second reaction forces are of equal intensity and orientation and of opposite orientation to the orientation of the compression force (E32), and wherein the second components of the first and second reaction forces are of equal intensity and opposite orientation.

10. The fuel cell (10) according to any one of claims 1 to 9, wherein the guidance system (30) further comprises two lateral compression members, a first lateral compression member exerting a compression force on the movable end plate (16), relative to the housing (18), according to the centering direction (Z), and the second lateral compression member exerting a compression force on the movable end plate, relative to the housing, opposite to the centering direction.

11. The fuel cell (10) according to any one of claims 1 to 9, wherein the fuel cell (10) further comprises a clamping system (24) exerting a clamping force (E24) on the movable end plate (16), relative to the housing (18), parallel to the stacking direction (X), tending to compress the stack (12) of electrochemical cells.
